# EUROPEAN PATENT APPLICATION

(11) **EP 2 843 566 A2**
(43) Date of publication of application: **04.03.2015**
(21) Application number: 14180903.8
(22) Date of filing: 13.08.2014
(51) Int. Cl.: G06F 17/27

(54) **Structured event log data entry from operator reviewed proposed text patterns**

(30) Priority: 29.08.2013 US 201314013795
(71) Applicant: Honeywell International Inc., Morristown, NJ 07962-2245 (US)
(72) Inventor: Macek, Karel, Morristown, NJ New Jersey 07962-2245 (US); Libal, Vit, Morristown, NJ New Jersey 07962-2245 (US); Schreder, James, Morristown, NJ New Jersey 07962-2245 (US)
(74) Representative: Houghton, Mark Phillip

(57) **Abstract**

A method (100) of structured event log data entry. A structured event log data entry algorithm is provided (101) including a text parser which utilizes stored information including a vocabulary for a human operated process defining classes representing structured information including structured events and structured devices, linguistic patterns for plain text analysis, and relationships between the classes. A pattern proposer utilizes stored linking relations establishing links between the classes and the linguistic patterns. An operator in the system records (102) a plain text event log entry describing an event that occurred in the system into a memory accessible by a processor implementing the algorithm. The text parser implements automatic pattern evaluating (103) the log entry for a matching of any portion of any of the linguistic patterns. The pattern proposer presents (104) a proposed structured event log entry including a structured event and/or structured device for the operator to review whenever the matching is successful.

## Description

### FIELD

Disclosed embodiments relate to structured event log entry into a database incident to an operator recording an event.

### BACKGROUND

In human operated systems such as security and safety systems, power monitoring systems, maintenance systems, traffic control systems, events and/or their annotations are manually entered (i.e. typed) into the system by an operator. The system will then store the events into a database as unstructured plain text entries, typically being in the form of one or more sentences.

Full text searching of unstructured plain text entries is the only possible operation that can be performed upon a database of unstructured plain text entries. Significant problems with full text searching include low search accuracy/reliability and high computational requirements.

Structured event log entries enable advanced querying. Use of advanced queries, in turn, results in higher information management efficiency including higher search accuracy/reliability, and relatively low computational requirements. Moreover, structured event log entries enables the use of advanced data analytics techniques such as improved learning and training of operators, event/event pattern classification, policies optimization, and actions scheduling. Using structured event log entries instead of unstructured textual entries can provide a significant benefit to the operators and end-users of a variety of operator involved systems.

There are several known ways for structured event log entries to be recorded into a database when/after an operator records the event as an unstructured plain text entry. One known way is to train an operator to use a sophisticated Graphical User Interface (GUI), such as being electronic forms, which directly enforce the event's structure and constrain the possible event structures to a predefined list presented on the predefined forms. There are significant disadvantages to this approach. Filling such forms is not user friendly which can result in low task completion efficiency often requiring that the operators receive special training. Furthermore the predefined forms are not flexible, so that each time an event structure needs to be changed, the GUI needs to be recompiled.

Another known method to produce structured event log entries is using advanced text processing methods that automatically generate an event structure from the unstructured plain text event log entry entered by an operator. This approach suffers from the same problems as the full text search as described above, most notably low structure retrieval accuracy/reliability.

### SUMMARY

This Summary is provided to introduce a brief selection of disclosed concepts in a simplified form that are further described below in the Detailed Description including the drawings provided. This Summary is not intended to limit the claimed subject matter's scope.

Disclosed embodiments include an event log entry solution and related computer systems including data processing that generates operator reviewed structured event log entries (structured information) from unstructured plain text event log entries received from operators involved in human operated processes, while also allowing the operator to also record the events in a plain text form. Disclosed embodiments are based on the combination of a designed predefined machine readable vocabulary enabling text parsing and text processing enabling a pattern proposer. Significant advantages of disclosed embodiments include operator friendliness and flexibility regarding the event structure, where the structured information can be changed without a need to redesign/recompile the underlying software.

### BRIEF DESCRIPTION OF THE DRAWINGS

FIG. 1 is a flow chart that shows steps in an example method of structured event log data entry, according to an example embodiment.
FIG. 2 is a detailed step-by-step depiction of steps in an example structured event log data entry sequence, including processing of a particular plain text event log entry example, according to an example embodiment.
FIG. 3 is a detailed step-by-step depiction of steps in an example structured event log data entry sequence processing of a particular plain text event log entry example, where the data processing system further includes an integration module, according to an example embodiment.
FIG. 4 is a block diagram depiction of an example computer system including a data processing system for automatically generating structured event log data entry from a plain text event log entry for a process run in a human operated system, according to an example embodiment.

### DETAILED DESCRIPTION

Disclosed embodiments are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed embodiments.

One having ordinary skill in the relevant art, however, will readily recognize that the subject matter disclosed herein can be practiced without one or more of the specific details or with other methods. In other instances, well-known structures or operations are not shown in detail to avoid obscuring certain aspects. This Disclosure is not limited by the illustrated ordering of acts or events, as some acts may occur in different orders and/or concurrently with other acts or events. Furthermore, not all illustrated acts or events are required to implement a methodology in accordance with the embodiments disclosed herein.

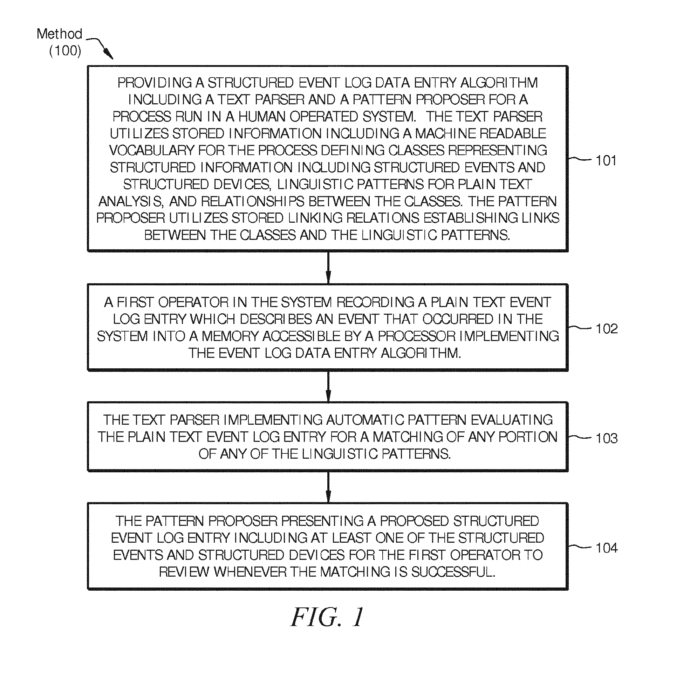

FIG. 1 is a flow chart that shows steps in an example method 100 of structured event log data entry from a plain text event log entry for a process run in a human operated system, according to an example embodiment. Disclosed embodiments may be realized as a set of software tools or as add-on modules to a target system which performs event log database management.

Step 101 comprises providing a structured event log data entry algorithm which includes a text parser and a pattern proposer. The text parser utilizes stored information including a machine readable vocabulary (hereafter a "vocabulary"), where the vocabulary (i) defines classes representing structured information including structured events and structured devices, and linguistic patterns for plain text analysis, and (ii) relationships between the classes. The text parser may be specialized for the event log entries produced by an operator (i.e. it may contain parsing rules specific to a given domain, given system and/or to an individual operator). The text parser may be manually designed or automatically/semi automatically inferred from annotated event log entry samples. The parser can offer to the designer an interface to review and change the text parser and produce the resulting parser specifications (e.g., a Backus-Naur Formmain (BNF) notation techniques for context-free grammar).

An example relationship between the classes can be "occurs at", such as a security event (a particular subclass of the class event) occurs in a given place (the class place), one example would be OCCURSAT(EVENT, PLACE). The vocabulary can be complex (e.g., with 10 or more classes and several hundred linguistic patterns) or very simple (e.g., with two or three classes and tens of linguistic patterns) and can define possible constraints such as man and woman are not overlapping patterns. The defining of the vocabulary can be done either manually using a (human) expert's knowledge, or automatically using machine learning techniques applied to relevant texts (e.g., textbooks, system manuals, or an annotated plain text event log database) optionally followed by a human expert's review and revision.

The classes can also include persons (individuals, e.g., persons, such as this device has been broken while being operated by XY), and if relevant sensors, actuators or other device types, policies, documents, and tools. The classes generally each include subclasses, such as the class of structured events including the subclasses of a control event, a hardware event, and a security event. The pattern proposer utilizes stored linking relations establishing links between the classes and the linguistic patterns. The vocabulary is generally designed by a programmer or an engineer familiar with the particular process run by the operator system, such as an oil refinery in one particular example.

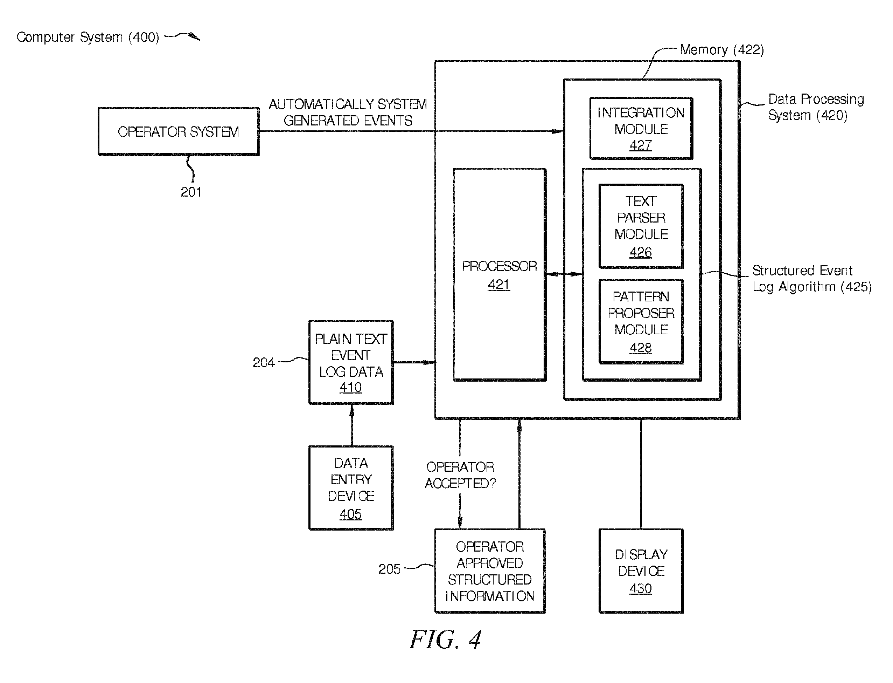

Step 102 comprises a first operator in the operator system recording a plain text event log entry which describes an event that occurred in the operator system into a memory accessible by a processor implementing the event log data entry algorithm. The processor (e.g., digital signal processor) is typically part of a data processing system within a computer system (e.g., see processor 421 in data processing system 420 of computer system 400 shown in FIG. 4 described below).

Step 103 comprises the text parser implementing automatic pattern evaluating the plain text event log entry for a matching (detecting for a presence of) of a portion of any of the stored linguistic patterns. More than one linguistic pattern may be matched. The mapping performed is generally more than simply word matching, since the respective patterns can be more complex and can contain some wild cards as well, and can include a plurality of words, such as a hardware EVENT (class of event) was observed at a SUBSYSTEM (class of place) and the assumed cause was CAUSE (class of cause). Whenever "was observed at" is detected in the text, the pattern is triggered and the algorithm can start to evaluate the sentence and may offer the words before this text as an event and after as a subsystem. For example, if the text contains e.g. "Gate 123", the algorithm can identify that the subsystem might be from the class gate and if the database already has Gate 123 in the structured database, a match can be successfully made.

Step 104 comprises whenever a portion of at least one linguistic patterns is matched, the pattern proposer presents a proposed structured event log entry including at least one of the structured events and structured devices for the first operator to review. As noted above, multiple patterns can be proposed. Provided the first operator accepts the proposed structured event log entry the proposed structured event log entry is saved in a first database. If the operator rejects the proposed structured event log entry, the plain text event log entry can be stored in a second database separate from the first database. If multiple proposed structures are proposed, for example a proposed event and a proposed device or in the form of alternatives, the operator can accept-in-part and reject-in-part.

In the case of rejection of the proposed structured event log entry, the operator's plain text event log entry may be retained without modification in a database. Moreover, there is the option to update the vocabulary and/or text parser. The plain text event log entries from the rejected matches can thus be used to update the vocabulary and/or the text parser. For example, the updating can be performed manually by an engineer, or semi-automatically by an engineer with support from a text processing tool.

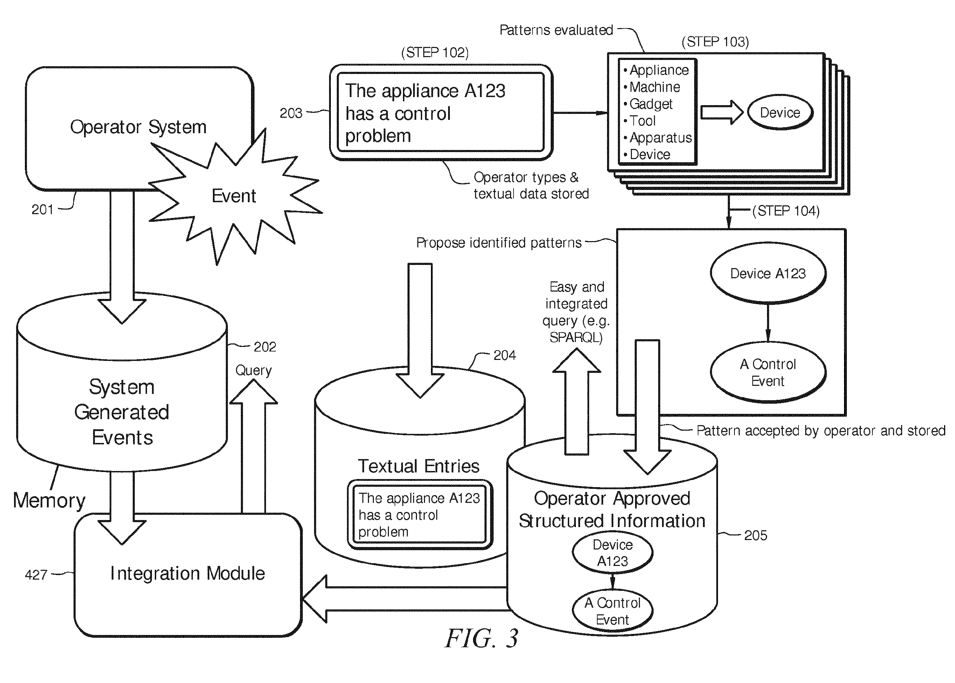

An integration module (see integration module 427 in FIG. 3 and FIG. 4 described below) can be created by a processor running a disclosed data integration algorithm that functions to optionally integrate the stored operator approved structured information with a stored log of automatic operator system generated events. This integration allows linking information from the operator such as regarding alarms and measurements from the operator system, such as a manufacturing plant. Furthermore, the integration module can allow an operator or other system individual to perform advanced queries such as formulating structured requirements on maintenance actions by typing, which can be automatically forwarded to other operator system staff. A console linked with the vocabulary via the linguistic patterns can be used also for instructions to the system (e.g., plant) directly, e.g. a direction to stop operation of a particular device (e.g., a particular burner).

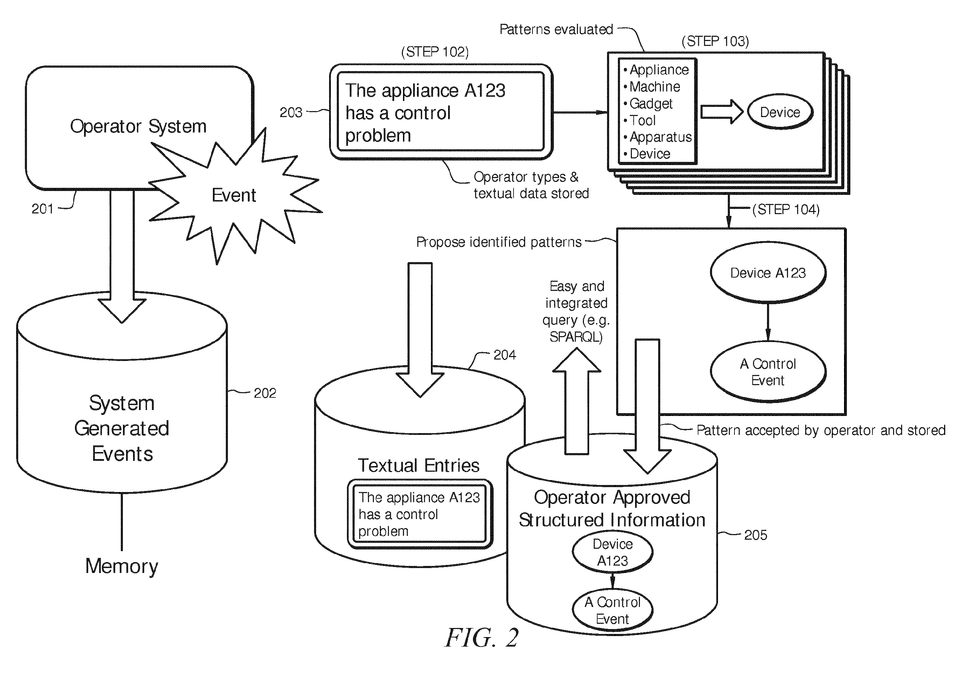

FIG. 2 is detailed step-by-step depiction of some of the steps in an example structured event log data entry sequence, including processing of a particular plain text event log entry example to generate operator reviewed structured information, according to an example embodiment. An event at the operator system 201 occurs which is loaded into a database of system generated events in memory 202. In the monitor portion 203 shown in FIG. 2, the plain text event log entry "The appliance A123 has a control problem" is shown which corresponds to step 102 in method 100.

The plain text event log entry "The appliance A123 has a control problem" is shown stored in memory 204 as a textual entry (without any processing changes). Patterns are then evaluated in this plain text event log entry "The appliance A123 has a control problem". For example, the pattern "appliance A123" is recognized by the text parser as being in the class "device" based on the class "device" having subclasses appliance, machine, gadget, tool, apparatus and device itself. The pattern evaluation performed corresponds to step 103 in method 100 where the text parser implements automatic pattern evaluating the plain text event log entry for a matching of any portion of any of the linguistic patterns.

The proposed identified patterns of "Device A123" and "A control event" corresponds to step 104 in method 100 where the pattern proposer presents a proposed structured event log entry including at least one of the structured events ("A control event") and structured devices ("Device A123") for the first operator to review whenever the matching is successful.

The pattern identified is then displayed in a display device for the operator to review. As shown, if the pattern is accepted by the operator, the proposed structured event log entry is saved into a database in memory 205 as operator approved structured information as shown in FIG. 2. The operator approved structured information facilitates simple and integrated queries, (e.g. querying using the Resource Description Framework (RDF) query language SPARQL which allows for a query to include triple patterns, conjunctions, disjunctions, and optional patterns.

FIG. 3 is the detailed step-by-step depiction of steps in an example structured event log data entry sequence processing of a particular plain text event log entry, where the data processing system further includes an integration module 427 that implements a disclosed data integration algorithm that functions to integrate the stored operator approved structured information in memory 205 with a log of automatic system generated events stored in memory 202 according to an example embodiment. As described below in FIG. 4, the integration module 427 is implemented by processor 421 running a disclosed data integration algorithm.

FIG. 4 is a block diagram depiction of an example computer system 400 for automatically generating structured event log data entry from a plain text event log entry for a process run in a human operator involved system shown as operator system 201. Computer system 400 includes a data entry device (e.g., a terminal) 405 for an operator to enter plain text event log data 410 which describes an event that occurred in the operator system 201 into a first database stored in memory 204.

Computer system 400 includes a data processing system 420 including a processor 421 and another memory 422 which implements a disclosed stored structured event log algorithm 425 including a text parser module 426 which utilizes stored information including a machine readable vocabulary, linguistic patterns for plain text analysis, and relationships between the classes, and a pattern proposer module 428 which utilizes stored linking relations establishing links between the classes and linguistic patterns. System generated events from the operator system 201 are shown reaching integration module 427 within memory 422 of the data processing system 420. The memory 204 is also accessible by the processor 421. The text parser module 426 is for implementing automatic pattern evaluating the plain text event log entry for a matching of any portion of any of the stored linguistic patterns.

The pattern proposer module 428 is for presenting a proposed structured event log entry including at least one of the structured events and structured devices at the display device 430 for an operator to review whenever the matching is successful. Provided the operator accepts the proposed structured event log entry, the proposed structured event log entry is entered into memory 205 as operator approved structured information.

Disclosed embodiments provide several features believed to be novel. Generation of structured event log entries are in a user friendly way and are linked to system generated events. Storing both structured and unstructured data for a given event at the same time is another feature. New flexibility regarding the event structure is provided, allowing simple software changes on the fly. Incremental improvement of the event structure retrieval using a predictive regime and auto-completion is another feature. Integration of the operator approved structured entries (information) provided by disclosed methods based on the manual entries, automatic text processing, and the events automatically generated by the system's sensors is yet another feature.

Disclosed embodiments can be applied to generally a variety of human operated processes, including but not limited to industrial plants, oil refineries, and medical offices. Moreover, disclosed embodiments may be used for police offices, military reporting, and firemen reporting.

While various disclosed embodiments have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

As will be appreciated by one skilled in the art, the subject matter disclosed herein may be embodied as a system, method or computer program product. Accordingly, this Disclosure can take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, this Disclosure may take the form of a computer program product embodied in any tangible medium of expression having computer usable program code embodied in the medium.

Any combination of one or more computer usable or computer readable medium(s) may be utilized. The computer-usable or computer-readable medium may be, for example, but not limited to, an electronic, magnetic, optical, electromagnetic, infrared, or semiconductor system, apparatus, or device. More specific examples (a non-exhaustive list) of the computer-readable medium would include non-transitory media including the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CDROM), an optical storage device, or a magnetic storage device.

## Claims

1. A method (100) of structured event log data entry for a process run in a human operated system, comprising:
providing (101) a data processing system (420) including a processor (421) implementing a structured event log data entry algorithm (425) including:
a text parser (426) which utilizes stored information including a machine readable vocabulary for said process defining classes representing structured information including structured events and structured devices, linguistic patterns for plain text analysis, and relationships between said classes, and
a pattern proposer (428) which utilizes stored linking relations establishing links between said classes and said linguistic patterns,
a first operator in said human operated system recording (102) a plain text event log entry which describes an event that occurred in said human operated system into a memory accessible by said processor;
said text parser implementing automatic pattern evaluating (103) said plain text event log entry for a matching of any portion of any of said linguistic patterns, and
said pattern proposer presenting a proposed structured event log entry (104) including at least one of said structured events and said structured devices for said first operator to review whenever said matching is successful.

2. The method of claim 1, further comprising provided said first operator accepts said proposed structured event log entry, saving said proposed structured event log entry in a first database.

3. The method of claim 2, further comprising provided said first operator rejects said proposed structured event log entry, retaining said plain text event log entry without modification in a second database separate from said first database.

4. The method of claim 1, wherein said vocabulary is obtained from examining text patterns from a historical database collected over a period of time from plain text event log entry data recorded by a plurality of operators in said human operated system responsive to human operated system generated events.

5. The method of claim 1, further comprising updating at least one of said vocabulary, said linguistic patterns and said relationships between said classes from said plain text event log entry when said matching is unsuccessful.

6. The method of claim 2, wherein said computer system further comprises an integration module having an accessible hybrid database including events automatically generated by said human operated system and said proposed structured event log entries that said first operator accepts, said method further comprising said first operator querying said hybrid database.

7. A computer system (400), comprising:
a data processing system (420) including a processor (421) and a first memory (422) accessible by said processor implementing a stored structured event log algorithm (425) including a text parser module (426) which utilizes stored information including a machine readable vocabulary for a process run in a human operated system defining classes representing structured information including structured events and structured devices, linguistic patterns for plain text analysis, and relationships between said classes, and a pattern proposer module (428) which utilizes stored linking relations establishing links between said classes and said linguistic patterns,
a data entry device (405) for a first operator in said human operated system for recording a plain text event log entry which describes an event that occurred in said human operated system in said first memory;
said text parser module implementing automatic pattern evaluating said plain text event log entry for a matching of any portion of any of said linguistic patterns, and
said pattern proposer module presenting a proposed structured event log entry including at least one of said structured events and said structured devices at a display device for said first operator to review whenever said matching is successful.

8. The computer system of claim 7, wherein said data processing system is operable for saving said proposed structured event log entry in a first database in a second memory (205) provided said first operator accepts said proposed structured event log entry.

9. The computer system of claim 7, wherein said vocabulary is obtained from examining text patterns from a historical database collected over a period of time from plain text event log entry data recorded by operators in said human operated system responsive to system generated events.

10. The computer system of claim 7, wherein said data processing system further comprises an integration module (427) having an accessible and searchable hybrid database including events automatically generated by said human operated system and said proposed structured event log entries that said first operator accepts in said first database.
